# EUROPEAN PATENT SPECIFICATION

(11) **EP 2 701 353 B1**
(45) Date of publication and mention of the grant of the patent: **07.10.2015**
(21) Application number: 12180121.1
(22) Date of filing: 10.08.2012
(51) Int. Cl.: H04L 12/70

(54) **Mobile Application Classification**
Mobile Anwendungsklassifizierung
Classification d'application mobile

(43) Date of publication of application: 26.02.2014
(73) Proprietor: Zhilabs S.L., 08029 Barcelona (ES)
(72) Inventor: Arpirez Vega, Julio César, 08029 Barcelona (ES); Zapater Cano, Sergi, 08029 Barcelona (ES); Raventós Simón, Joan, 08029 Barcelona (ES)
(74) Representative: Grünecker Patent- und Rechtsanwälte PartG mbB

(56) References cited:
- WO-A1-02/15488
- US-A- 6 141 686
- US-A1- 2010 250 918
- US-A1- 2012 144 025
- US-B1- 7 644 150

## Description

The invention is related to a method to perform mobile application classification as well as a system for performing said mobile application classification and a respective computer readable medium comprising necessary instructions.

### Background

The general concept of application classification is well known in the art.

For example US 2012/0144025 A1 describes a method of traffic flow classification that can be used for controlling traffic flow within a communication network. This method uses a first mapping process for linking an application process to a class, a second mapping process for linking an application process to a unique signature, and a third mapping process for managing a record or accumulated linking information such that a traffic flow associated with an application process may be identified and such that a classification of the respective traffic flow can be recognized. This method is performed on a node within a network.

Further, US 7 644 150 B1 discloses a method for managing a network. The method includes extracting, from a first traffic flow, a signature based on layer-3/layer-4 information and storing the extracted signature together with layer-7 information in a signature repository.

Moreover, in US 2010/0250918 A1 a method and a system for identifying an application type from encypted traffic is described. The system is first trained by using encrypted traffic for which the unencrypted result is known. The trained system then extracts at least a portion of IP flow parameters from the encrypted traffic using at least one known specific target encryption type. At least one corresponding application type is then inferred for the extracted IP flow parameters in order to identify the application type.

Further, it is generally known in the art to perform a respective classification of applications in input sources as the already mentioned nodes. Due to technical constraints of many of these input sources, the classifications are kept for a short term, meaning typically during one session.

### Technical Problem

The problem solved by the invention is therefore to provide a method for mobile application classification that can improve over time.

### Solution

This problem is solved by the method to perform mobile application classification according to independent claim 1 and a system for performing such a mobile application classification according to claim 6. The dependent claims describe further preferred embodiments of the invention.

The method to perform mobile application classification according to the invention comprises obtaining, from input sources, input records wherein the input records contain layer 4 and layer 7 information. Further, the method comprises evaluating, by analyzing the input records obtained from the input sources, whether one or more of the input records have already been classified and, if one or more of the input records are not already classified, classifying the one or more input records by matching a set of signatures to the layer 4 and layer 7 information of the one or more input records. Further, the method comprises generating an on-going classification status consisting of a set of possible applications by using the classified input records and further storing, in a mobile context, the on-going classification status. In this mobile context past classifications are stored as well. Moreover, the method comprises generating a final classification as an output of the classification method based on a combination of the on-going classification status and the past classifications. The method is characterized in that the final classification is generated by applying a weighting to the on-going classification status in order to give them more relevance in comparison to the past classifications in the final classification. This method allows for classifying the input records of any mobile application and further allows for improving the classification process by storing the already classified input records, i.e. the respective classifications, in a persistent storage and by generating the mobile context consisting of the on-going classification status and new and past classifications, thereby allowing the method for performing mobile application classification to improve over time. According to the OSI model, layer 4 is the transport layer which provides transparent transfer of data between end-users and controls the reliability of a given link through flow control, segmentation/desegmentation and error control. Layer 7 is called the application layer in the OSI model and is considered to be the layer closest to the end-user because it directly interacts with the application interface, therefore including functions as identifying communication partners, determining resource availability, and synchronizing communication. Further, this allows for judging based on the past classification and the on-going classification status on whether the classified input record belongs to a certain classification by taking into account the on-going classification status with a greater weighting than the past classifications

The present invention therefore is related to a method that allows for identifying an application that was used by an end-user, using a mobile device, through its input records, i.e. the information regarding the used application that can be obtained from the input sources that were used by said application.

In a further embodiment, the method is characterized in that the input records contain at least one or more of a time stamp, a mobile identifier, a session identifier, uplink bytes, downlink bytes, and flow duration. This additional information allows for the improvement of the classification process in general, and can help improve the results obtained from the final classification.

In a further embodiment, the signatures are derived from automatic inspection of non-encrypted traffic of the application. This allows for identifying new applications that at least partially transmit encrypted traffic without having to decrypt the traffic.

In another embodiment, the method is characterized in that the signatures are derived from manual inspection of non-encrypted traffic of the application. As in the previous embodiment, this allows for identifying applications that at least partially send encrypted traffic without having to decrypt it and further allows for a dynamic and adaptive deriving of the signatures due to the manual inspection.

In a further embodiment, the method is characterized in that if the input record is a DNS flow, a reverse DNS classification is conducted and a DNS signature match is applied. This allows for even classifying mobile applications that use DNS flows thereby enhancing the flexibility of the method for performing mobile application classification.

In a further embodiment, the method is characterized in that a bookkeeping process is performed that identifies the actual on-going classification as a past classification and erases past classifications after a predetermined time has elapsed. This allows for dynamically keeping the mobile context updated without losing classifications that belong to certain applications that are used frequently, not only in the past but in the present, and are likely to be used in the future.

A System for performing a mobile application classification as described above requires a number of modules. The respective system comprises an acquiring module configured to obtain, from one or more input sources, one or more input records, the input records containing layer 4 and layer 7 information and a classification module, comprising at least a persistent application and a persistent DNS signature storage, configured to classify, if the one or more input records were not already classified, by matching a set of signatures to layer 4 and layer 7 information, The system further comprises a persistent storage module configured to store new classifications and past classifications in a mobile context and a profile generating module, comprising at least a persistent storage storing traffic profiles, configured to generate the on-going classification status consisting of a set of possible applications by using the classified input records and to store, in the persistent storage module, the on-going classification status in the mobile context and, still further, the system comprises an output module configured to output a final classification, based on the on-going classification status and past classifications. The system is characterized in that the output module is further configured to apply a weighting to the on-going classification in order to give them more relevance in the final classification. Such a system allows for performing a mobile application classification and further, due to providing persistent storage, allows for keeping the classifications within a mobile context over time and over various sessions. Further, the classification process can be adapted to the on-going classification rather than taking into account classifications that were achieved a long time ago. Hence, the final classification is performed by taking into account immediately previously obtained classifications rather than classifications that were obtained a long time ago, thereby improving the likelihood that the classification is correct.

In a further embodiment, the system is characterized in that the acquiring module acquires information from at least one of the network nodes, network probes, content firewalls, content optimizers, content proxies, content caches, and routers with netflow-equivalent capabilities. By acquiring information from at least one of these sources, it is possible to shorten the classification process by taking into account for example at least partial classifications that were obtained by these sources and, hence, allows the system to spare resources.

A computer-readable medium can be equipped with instructions that cause a computer system such as the system of the previous embodiment to perform the method for mobile application classification of any of the previous embodiments. This allows for enabling a computer system that already comprises the required hardware component to conduct a method for mobile application classification according to the present invention.

### Short description of figures

- Figure 1:: a schematic view on a system capable of performing the described method.
- Figure 2:: a schematic depiction of the described method.

### Detailed description

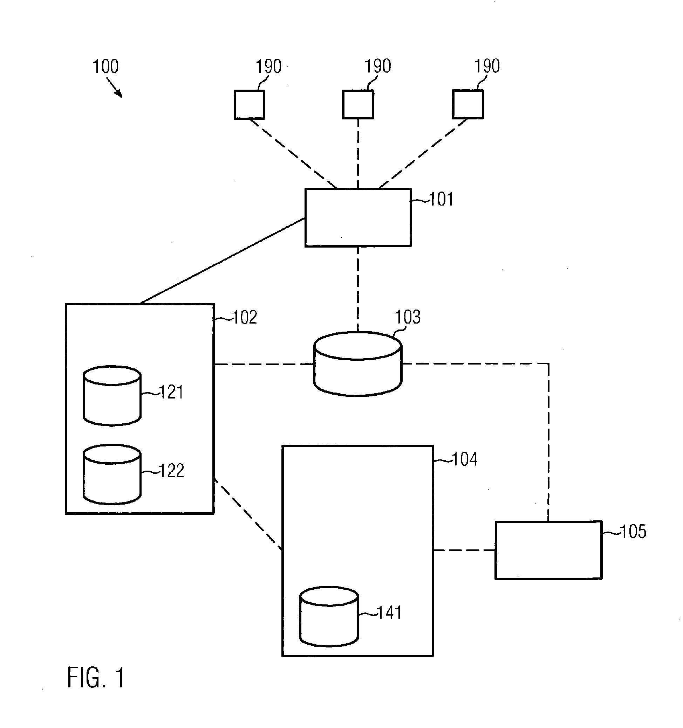

Figure 1 illustrates a schematic view of a system comprising components that allow the system to perform the later described method for mobile application classification. Therefore, the system will be referred to hereinafter as the classification system.

The classification system 100 as shown in Figure 1 comprises an acquiring module 101. The acquiring module is capable of retrieving sets of input records, that will be described later, from a variety of input sources 190. It will be appreciated that these input sources 190 may be everything that is capable of communicating with a mobile device on the one hand and the classification system 100 on the other hand. Examples for input sources are network nodes like GGSN or BRAS, or network probes. Furthermore, input sources can be content firewalls or content optimizers or content proxies and caches, as well as routers with netflow-equivalent capabilities. This may be considered as a non-exhaustive list and even further input sources may be considered.

It will be appreciated that the acquiring module 101 that can obtain a complete input record which can contain not only the partial information provided by the input sources 190 but can also contain correlations of this partial information. The classification system 100 further comprises at least a classification module 102. This classification module is configured to classify the input record, as will be described later. To carry out this classification, the classification module 102 comprises at least a persistent application storage 121 and a persistent DNS signature storage 122. It will be appreciated that the attribution of the classification module that can perform the classification with the persistent application storage 121 and the persistent DNS signature storage 122 is not mandatory. Instead, it is also be possible to provide a classification module 102 that consists of a hardware component and a software component and further provides separated persistent application storage 121 and persistent DNS signature storage 122 physically located at any place in the classification system 100 but linked with the classification module 102. Therefore, the classification module 102 comprising the persistent application storage 121 and the persistent DNS signature storage 122 may be understood as a component of the classification system 100 consisting of the classification module 102 and the persistent application storage 121 and the persistent DNS signature storage 122 wherein these components are at least linked in such a way that allows for communication from the persistent storages 121 and 122 on the one side to the classification module 102 on the other side and vice versa.

Further, the classification system 100 comprises a profile generating module 104 that is capable of generating the later described on-going classification status. Since this on-going classification status fulfils an important role in the method according to the invention, it is necessary to allow the profile generating module 104 to store said on-going classification status. Therefore, the profile generating module 104 comprises at least a persistent storage 141 that can store the on-going classification status. Further, this persistent storage will be used to store traffic profiles. For the correlation between the profile generating module 104 and its allocated persistent storage, the same as for the previously described classification module 102 and the respective storage 121 and 122 may be considered, i.e. it is possible to provide the profile generating module 104 and its persistent storage 141 as one hardware component or as separate components (for example located at different places) that are linked with each other.

Moreover, the classification system 100 includes an output module 105 that can output a final classification. Still further, a persistent storage module 103 is provided that can store at least new classifications and past classifications in a mobile context. In order to do so, the persistent storage module 103 will be integrated, or at least linked, to the acquiring module 101, the classification module 102, the profile generating module 104, and the output module 105. It will be preferred that this connection is a two-way connection, thereby allowing the classification module 102 to provide the persistent storage 103 with information that has to be stored in the new classifications or past classifications in a mobile context. Further, this two-way connection allows for the profile generating module 104 to store data regarding the on-going classification status in the persistent storage module 103. Further, it will be preferred that the classification module 102 that can perform the classification and the profile generating module 104 that can generate the on-going classification status are not only tangentially linked via the persistent storage module 103 but are also linked directly in order to allow these modules to share information for generating information necessary for the mobile context. Still further, the output module 105 is not only connected to the persistent storage module 103 in order to obtain information of the mobile context necessary to generate a final classification but will also be connected to the profile generating module 104 directly in order to obtain information regarding the on-going classification status for facilitating generating of the final classification.

It is possible to provide the described storages 121, 122, 103, and 141 as separate hardware components. But it should be noted that this does not need to be the case. All of the described storages 121, 122, 103, and 141 can be provided as only one storage component. This will reduce the number of connections necessary to allow the acquiring module 101, the classification module 102, the profile generating module 104, and the output module 105 to communicate with each other and to obtain or transmit information. Further, it should be noted that the separation in an acquiring module 101, a classification module 102, a profile generating module 104, and an output module 105 does not necessarily involve a physical separation of these modules, although illustrated in Figure 1 for a better understanding. It will also be possible to provide these modules as one hardware component or at least together in one localized system. However, any design and arrangement of the components described in figure 1 that still allows for the components to communicate with each other and to carry out their respective processes lies with the inventive concept.

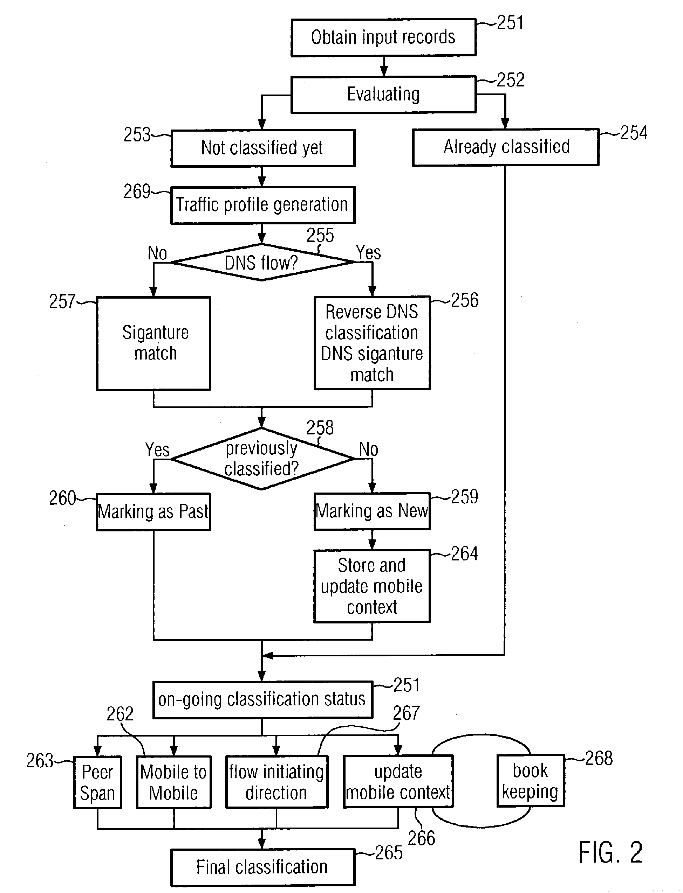

Figure 2 describes in a more general way how the method is intended to work. It starts at 251 with the acquiring module obtaining input records from the one or more input sources. The input records may comprise timestamp information, mobile identifiers, session identifiers, layer 4 information (src-ip, src-port, dst-ip, dst-port,...) layer 7 information, uplink and downlink bytes, flow duration and any further information that may be provided via the input sources, especially preliminary classification done by said input sources.

A typical input record could contain the following information, although not limited to it:
bearer.session-id: 2a328b34
bearer.imsi: digested-imsi1
bearer.apn: apn1
bearer.msisdn: digested-msisdn1
bearer.imeisv: 125390037199304
bearer.packetsDown: 4
bearer.packetsUp: 4
bearer.volumeDown: 308
bearer.volumeUp: 244
net.cell-ip: 10.10.10.10
net.cell-port: 65146
net.srv-ip: 8.8.8.8
net.srv-port: 53
net.avg-latency: 30
net.throughputUp: 46925142
net.throughputDown: 59233376
net.peak-throughputUp: 78217525
net.peak-throughputDown: 98733597
net.uplink: 1
event.start-time: 20111121233504300000
event.stop-time: 20111121234004300000
net.ip-proto: 17
dns.host: hb.whatsapp.net

The first group of information is related to more general issues, like the session-id, IMSI-information (International Mobile Subscriber Identity), APN-information (Access Point Name). It can further contain information on the Mobile Subscriber Integrated Services Digital Network Number which is globally unique for each device and the IMEISV-Number (International Mobile Station Equipment Identity and Software Version Number). Still further, information regarding the uploaded and downloaded packets and the volume can be provided. The second group of information may contain the layer 4 information (connection information and data transfer information, like the overall throughput in the downlink and uplink direction and peak-throughput values in both directions). The third group may contain further timestamp-information. Further, the last group may contain layer 7 information for example regarding the host of the session, like the DNS-host. As the above example of an input record is only provided for explanatory purposes, it should be noted that the input records obtain by the acquiring module may include less or even more information.

When these input records are obtained, they are evaluated at the evaluating step 252 and a first classification is carried out. At this step, it is determined whether the obtained input records were already classified 254 or have not yet been classified 253 by the input sources. This classification is carried out because it is commonly known in the art that information that can be obtained from input sources like firewalls or routers can be sufficient to classify an application. Hence, when it is determined at the evaluating step 252 that one or a plurality of input records have already been sufficiently classified by the input sources, these input records are considered as already classified 254. If this is the case, the already classified input records are directly used by the profile generating module in order to generate an on-going classification status 261. Considering the above given example of an input record, in the last group the DNS-host was resolved. This allows for identifying the application. A result of such an identification during the evaluating step 252 would be the application being "Whatsapp". Therefore, the input record in this case may provide enough information for identifying the used application without any further steps.

If, on the other hand, it is found out at the evaluating step 252 that one or more input records have not yet been classified 253, further steps are carried out. First, a traffic profile generation 269 can be carried out. During this traffic profile generation 269, a set of traffic parameters are evaluated that comply with the input records. By doing so, for example the packet size, throughput, peer span, or other parameters can be obtained for uplink and downlink directions and, hence, for each parameter of the traffic profile a range can be established in which the parameters identify the traffic type. As an example, one could consider a user that watches, via his mobile device, a video that he obtains from a respective webpage. That would result in a traffic profile where there are only a few bytes uploaded in order to request the video and where a great amount of data is downloaded in order to provide the video. Hence, the traffic profile generation step 269 would allow for establishing an identification of the traffic type that would identify the application as a data download application for example. Hence, at this point, it is not possible to distinguish on the basis of the mere amount of data downloaded whether the user uses an application for watching a video or downloading a book or listening to music that is downloaded, but it can be determined whether the application is used for downloading large amounts of data while only transmitting a request for said data or if it is an application where download and upload bytes are evenly distributed, like for instant messenger applications. The generated traffic profile may contain some or all of the following information, or even more information:
voip detected: avgUp:56.4, avgDown:174.5, pktsUp:10, pktsDown:6,
volumeUp:564, volumeDown:1047

As already explained above, information on the caused traffic is obtained from the input records, i.e. information of the average upload (avgUp) and download (avgDown), the number of uploaded and downloaded packets (pktsUp, pktsDown) and the overall amount of uploaded and downloaded data (volumeUp, volumeDown). Further it can be possible to identify whether the traffic profile is related to a Voice-over-IP-communication (voip).

After this traffic profile generation 269 in Fig. 2 it is determined whether the one or more input records are DNS flows or not. It should be noted that it is also possible to conduct this in parallel or before the above described traffic profile generation 269 since an existing traffic profile for a given input record is not mandatory for conducting for determining whether the one or more input records are DNS flows. In any case, if it is determined that at least one of the input records is no DNS flow, an application signature match is carried out in the application signature classification phase 257. The signature match is performed by matching a set of already known signatures to the layer 4 and to the layer 7 information included in the input records. The already known signatures in the set of signatures are obtained from the persistent application storage of Figure 1. To provide two examples, this can result in the following identification protocols:
1. applogic-detected-> imsi=digested-imsix, appName=facebook, nettag=http, pkts=63, volume=45716
2. port-detected-> imsi=digested-imsiy, nettag=jabber, pkts=1, volume= 40

In the first example, among further information regarding the IMSI-Number of the used device, the application name (in this case "facebook") was resolved, thereby identifying the application that was used. In the second example, an instant messaging protocol is detected (jabber) and hence an instant messenger application was used. Although, at this point it can not be resolved in the second example which instant messenger was used exactly, this clearly limits the number of possibly used applications.

If it is determined by the classification module that at least one of the input records is a DNS flow, a reverse DNS classification together with a DNS signature match 256 is performed on the respective input records. The reverse DNS classification comprises a reverse DNS lookup on the flow server IP and, hence, the source of the data flow can be obtained. The DNS signature match then applies a set of DNS signatures that were stored in the persistent DNS signature storage thereby allowing for a further identification of the application. This may result in an identification protocol like
host-detected-> imsi=digested-imsixx, app=whatsapp,
host=sro.whatsapp.net, pkts=2, volume=204

Thereby resolving the host-id and identifying the used application.

Since the reverse DNS lookup is quite expensive with regard to computer resources, it may be advantageous to provide a reverse DNS cache together with the persistent DNS signature storage in order to reduce the computer resources required for performing the reverse DNS classification phase 256. Further, although the reverse DNS classification can in principle be performed on any input records that contain a DNS flow, it might be more effective to just carry out this reverse DNS classification on encrypted flows, since unencrypted flows allow for further identification without resolving the server IP, for example by further examination of the remaining information included in the input record for said unencrypted flow. If the Reverse DNS-Classification is performed on an encrypted flow, the information obtained from the input record could include the following:
cache-resolved serverIP:17.174.2.35, host:iphone-services-ls-st13-ssl.apple.com, app=apple-iphone-services

As can be seen, it is possible with this reverse DNS lookup to identify the Server-IP, thereby unambiguously identifying the host which may result in an identification of the used application, in this case Apple's iPhone Service.

After these steps, i.e. the reverse DNS classification phase 256 for input records being identified as DNS flows or the signature match phase 257 for input records being identified as not being DNS flows, it is evaluated 258 whether input records of the same mobile device were classified by the classification system in a previous session, which would mean that a respective classification of previous input records as belonging to a now classified application does already exist in the mobile context of a particular mobile device. This evaluation 258 can be achieved at this point, because, like in the first example for non-DNS-flows and in the DNS-flow example, the name of the application was determined and therefore the used application was identified. If it is determined at evaluation step 258, that a previous classification process led to the same application, the now identified application is marked as a past classification and the respective classification in the mobile context can be used (e.g. by assigning an indicator that indicates that the same application was used again or by copying the previous classification and allow for assigning further details on, e.g. the transmitted data, upload/download rates,...) for further steps, especially for updating the mobile context and for generating and /or updating the on-going classification status. If this is not the case, such input records are marked as new classifications 259 and are stored in the mobile context on the persistent storage module. Thereby, these new classifications are used to update 264 the mobile context in order to be in an up-to-date state regarding the applications that are commonly used at a certain time. Still further, after classifying and marking 259 the results of the classification as new classifications, they as well are used by the profile generating module to generate and/or update the on-going classification status together with the input records that were evaluated as already identified by the input sources 254. This on-going classification status may be considered as a snapshot of the current status of the classification. This means that, in the on-going classification status, the progress in the classification process is stored. Hence, with each step taken to refine the current classification status, the on-going classification status is updated. It should be noted that the evaluation step 258 is not mandatory. It would also be possible to provide, for each received input record, one entry in the mobile context, i.e. each time storing the input record and the obtained information in an "new classification" within the mobile context. This can lead to the mobile context containing the greatest amount of information possible. However, by evaluating 258 if there is a classification for an identified application in the mobile context already, the process can be made less expensive with respect to computer resources.

The on-going classification status 261 can be further refined. For example, a mobile to mobile classification phase 262 can be performed, thereby determining whether or not the flow is a direct one between mobiles. As an example, it can be determined whether data is directly transmitted between two mobiles or whether an application or program is used that first directs the data to a local server and then transmits, from this server, the data to the second mobile. Such a determination can help to classify the application used more effectively. A respective identification protocol would contain information regarding the server-IP and the cell-IP
mobile-to-mobile detected serverIP:10.10.254.1, cellIP:
10.10.254.239 9
thereby resolving the used IP's.

Still further, it is also possible to use a peer span classification phase 263. This allows for identifying whether or not the application retrieves or transmits data to several peers. As an example, one can consider the video download described before. In such a case, the user may transmit, via his mobile device, a request for a certain video from a webpage. In return, he can download the requested video via a peer-to-peer connection with a plurality of peers. This can be identified by checking the information in the input records regarding the last used ephemeral ports for said mobile device. Further, when applying a set of thresholds, a further limitation regarding the used application can be obtained. As an example, the input records for downloading one video and for downloading one music sample, both having the same duration, will in general differ from each other in the amount of data downloaded. And, by comparing the input records to, for example thresholds that refer to the downloaded amount of data, it is possible to identify whether the application is used for downloading a video or a music sample. For explanatory purpose, a possible identification protocol based on a peer span classification is provided:
ephemeral-detected: 'voip:skype:unknown', volume:2559, app='skype'

This protocol includes information that the use of ephemeral ports was detected and that a Voice-over-IP connection was established. Further information on the transmitted volume is included and the used application is identified.

Still further, a flow initiating direction phase 267 can be applied in order to find out more about the used application. This is because many types of applications initiate a significant number of flows in the downlink direction against the usual uplink direction. Hence, identifying such flows and comparing them to a set of thresholds can further isolate the type of application that is used. An example for such a flow initiation identification is provided here:
Downlink-flow detected: 'p2p', volume: 1210, threshold-downlink-flows crossed>10, app='p2p'

The flow initiation direction phase 267 identifies, based on for example the above given "threshold-downlink-flows" whether an peer-to-peer connection was established or not. If the application crosses a given threshold, the flow initiation direction phase 267 will identify a peer-2-peer connection as being present.

The results of the classification performed in one or more of the steps in item 263, 262 or 267 can be used to update the on-going classification status, which maybe stored in the mobile context (of a mobile device).

Regardless of the number of further classification phases that are used in order to improve the on-going classification status, the output module can generate and output a final classification 265. This final classification is based on the current on-going classification status 261 and potentially the further classification phases 262, 263, 265, and 267 and is based on the past classifications. The final classification will take into account all achieved partial classifications obtained from the input records during the above described processes. Hence, it will result in the "best guess" for the application that was used.

The past classifications are stored in the mobile context 266 itself. The mobile context on its own can be updated in each session the system and the described method is used by saving the on-going classification status in the mobile context. Still further, it is possible to perform a bookkeeping process 268 in order to allow for the on-going classifications in the current session to fade away into past classifications in further sessions and to delete even old classifications. When generating the final classification 265 it may also be advantageous to apply a weighting to the on-going classification status as well as the past classifications stored in the mobile context. This is because providing the on-going classification status with more relevant classifications compared to old and even older classifications can enhance the likelihood of finally classifying the application used based on the received input records.

A mobile context may lead to a condensation of the obtained and analyzed information in an output of the following kind:
Imsi: digested-imsizz
Last-hour-Volume: 4408140
Last-classified-app: browsing
Last-day-classified-apps: facebook:browsing
Active-Ephemeral: False

In the first line, the device is identified by its IMSI Number (or at least the card in the mobile phone is identified), thereby linking the mobile context to a certain device or a certain mobile card. This is not mandatory. It may also be of interest to collect information of used application regardless by which mobile device the application is used. Further information regarding the transmitted and/or received volume can be included in the mobile context and, on the basis of an identification of the used application with the device by which it was used, information regarding the actual used application and previously used applications (like the applications classified the last day). Still further, information regarding the use of ephemeral ports may be included. The mobile context can contain even more details on the used applications (like precise number of uploaded and downloaded data, timestamp information or any other information given above), although it might be advantageous to reduce the size of each mobile context in order to save memory space. If this is not necessary, the mobile context can include details regarding the application that was identified on any level. Further, by using the book keeping process 268 it is possible to not only fade away older classifications like the above mentioned, but to reduce, with time, the amount of information contained in past classifications contained in the mobile context. This means that for the actual identified application, many details are stored. If, in the mobile context, a previous classification was stored for several days, the number of details included in this classification may be reduced by discarding for example information on the amount of data transmitted or received or timestamp information or any other information, such that the total size of this older classification is reduced, whereas the most actual classification or classifications are kept with many details.

There are various algorithms that can be used in order to weight the on-going classification status and the past classifications stored in the mobile context. In any case it should be noted that the weighting of the on-going classification status compared to the past ones can only be achieved by processing the information obtained from the current input record (i.e. the current potential classification and the further information stored in the on-going classification status like voice over ip, peer-to-peer and so on). To provide an example, it could be advantageous to provide a voting weight to each classification stored. The respective weights could decrease with a function of how recent the respective classifications occur during a number of sessions, i.e. how frequently they occur. This would be a quite straight forward weighting process that on the one hand will be quite robust but on the other hand could fail considering correlations that may occur when different applications are used. As an example it could be considered, that a user uses a first application and after that uses a specific application with a higher probability than other applications. Therefore, a more sophisticated approach could use further processes that can be applied to the system that carries out the identification process, like known machine learning processes like boosting, arcing or bagging. The given examples do not provide a complete summary of the algorithms that could be used in order to facilitate the weighting of the past classifications and the on-going classification status. Any other algorithm, that is deemed appropriate, can be used.

The step in the classification of generating a traffic profile (item 269), and the signature matching (item 257), the reverse DNS classification (item 256), the peer span analysis (item 263), the mobile to mobile analysis (item 262) and the flow initiating direction analysis (item 267) can be performed sequentially, i.e. one after the other. It is, however advantageous to perform two, three or four or more of those steps in parallel.

In summary, the above described method allows for classifying obtained input records by matching it to already known signatures of other applications and input records of other applications that are stored in a mobile context that resides on a persistent storage, thereby making a guess (optionally expressed as a probability) for which application belongs to said input records. It will be appreciated that the described system and method improves over time. This is because the more applications are classified, the better the method will work in the future, since more input records (and/or corresponding entries, i.e. classifications, in the mobile context) for already classified applications are available that can be compared to a new input record. It will also be appreciated that this process even improves identification of applications that cause encrypted flows. This is because even for encrypted flows, some information, for example the amount of uploaded and downloaded data, can be obtained. This, together with further information for example regarding the number of peers that are used or the flow duration, may allow for maybe not precisely identifying the used application but at least classifying to which type of application the respective input record belongs. It should also be noted that the classification process will become less resource consuming with time because the number of steps needed until a final classification can be output will decrease since there will be more input records and corresponding classifications available in the persistent storage that have already been classified. Hence, many of the obtained input records will not have to run through the complete classification process again. Still further, the bookkeeping process allows for a continued updating and discarding of classifications stored in the mobile context, thereby ensuring that applications are only taken into consideration that are likely to be used and that applications that have not been used for a long time are faded away or discarded.

## Claims

1. A method to perform mobile application classification, comprising:
Obtaining (251), from one or more input sources, one or more input records, the input records containing layer 4 and layer 7 information;
the layer 4 and layer 7 being layers of the Open System Interconnection, OSI, model;
Evaluating (252), by analyzing the one or more input records obtained from the one or more input sources, whether one or more of the input records have already been provided with a classification;
if the one or more input records have not been provided with a classification already (253), providing a classification to the one or more input records by matching a set of signatures to the layer 4 and layer 7 information of the one or more input records;
generating an on-going classification status (261) consisting of a set of possible applications by using the classifications;
storing, in a mobile context, the on-going classification status, wherein in the mobile context (266) also past classifications are stored;
generating a final classification (265) as an output of the classification method, based on a combination of the on-going classification status and the past classifications;
**characterized in that** the final classification is generated by applying a weighting to the on-going classification status in order to give them more relevance in comparison to the past classifications in the final classification.

2. The method of claim 1, **characterized in that** the input records contain at least one or more of the following: timestamp, mobile identifier, Session identifier, Uplink Bytes, Downlink Bytes, Flow duration.

3. The method of claim 1 or 2, **characterized in that** the signatures are derived from automatic inspection of non-encrypted traffic of the application.

4. The method of claim 1 or 2, **characterized in that** the signatures are derived from manual inspection of non-encrypted traffic of the application.

5. The method of any of the preceding claims **characterized in that** a bookkeeping process is performed (268) that identifies the actual on-going classification as a past classification and erases past classifications after a predetermined time has elapsed.

6. A System (100) for performing a mobile application classification, comprising:
an acquiring module (101) configured to obtain from one or more input sources(190), one or more input records, the input records containing layer 4 and layer 7 information;
the layer 4 and layer 7 being layers of the Open System Interconnection, OSI, model;
a classification module (102), comprising at least a persistent application storage (121) and a persistent Domain Name System, DNS, signature storage (122), configured to evaluate, if the one or more input records were not already provided with a classification, by matching a set of signatures to layer 4 and layer 7 information;
a persistent storage module (103) configured to store the classifications and past classifications in a mobile context;
a profile generating module (104), comprising at least a persistent storage (141) storing traffic profiles, configured to generate an on-going classification status (261) consisting of a set of possible applications by using the classified input records and to store, in the persistent storage module, the on-going classification status in the mobile context;
an output module (105) configured to output a final classification (265), based on the on-going classification status (261) and the past classifications;
**characterized in that** the output module is further configured to apply a weighting to the on-going classification in order to give them more relevance in comparison to the past classifications in the final classification.

7. The System of claim 6, **characterized in that** the acquiring module (101) acquires information from at least one of: network nodes, network probes, Content Firewalls, Content Optimizers, Content proxies, Content caches, Routers with netflow-equivalent capabilities.

8. Computer-readable medium comprising instructions that cause the System (100) of claim 6 to perform all the steps of the method of claim 1.

## Patentansprüche

1. Ein Verfahren zum Ausführen einer Klassifikation einer mobile Anwendungen, umfassend:
erlangen (251), von einer oder mehreren Eingabequellen, einen oder mehrerer Eingabesätze, die Eingabesätze umfassend Schicht-4 und Schicht-7 Informationen;
die Schicht 4 und Schicht 7 sind Schichten des Open System Interconnection, OSI, Modells;
bewerten (252), durch analysieren des einen oder der mehreren Eingabesätze, die von der einen oder den mehreren Eingabequellen erlangt wurden, ob ein oder mehrere der Eingabesätze bereits mit einer Klassifikation ausgestattet wurden;
wenn der eine oder die mehreren Eingabesätze noch nicht mit einer Klassifikation ausgestattet wurden (253), bereitstellen einer Klassifikation für den einen oder die mehreren Eingabesätze durch Vergleichen eines Satzes von Signaturen mit den Schicht-4 und Schicht-7 Informationen des einen oder der mehreren Eingabesätze;
erzeugen, durch Anwendung der Klassifikationen, eines aktuellen Klassifikationsstatus (261), der aus einem Satz von möglichen Anwendungen besteht;
speichern, in einem mobilen Kontext, des aktuelles Klassifikationsstatus, wobei in dem mobilen Kontext (266) auch frühere Klassifikationen gespeichert sind;
erzeugen einer finalen Klassifikation (265) als eine Ausgabe des Klassifikationsverfahrens, basierend auf einer Kombination des aktuellen Klassifikationsstatus und der früheren Klassifikationen;
dadurch charakterisiert, dass die finale Klassifikation durch anwenden einer Gewichtung auf den aktuellen Klassifikationsstatus erzeugt wird, um diesem mehr Relevanz verglichen mit den früheren Klassifikationen in der finalen Klassifikation zu geben.

2. Das Verfahren nach Anspruch 1, dadurch charakterisiert, dass die Eingabesätze wenigstens eines oder mehreres von folgendem beinhalten: einen Zeitstempel, eine mobile Kennung, eine Sitzungskennung, Uplink Bytes, Downlink Bytes, Datenflussdauer.

3. Das Verfahren nach Anspruch 1 oder 2, dadurch charakterisiert, dass die Signaturen von einer automatischen Inspektion von nicht verschlüsseltem Verkehr der Anwendung abgeleitet werden.

4. Das Verfahren nach Anspruch 1 oder 2, dadurch charakterisiert, dass die Signaturen von einer manuellen Inspektion von nicht verschlüsseltem Verkehr der Anwendung abgeleitet werden.

5. Das Verfahren nach einem der vorangegangenen Ansprüche, dadurch charakterisiert, dass ein Buchhaltungsprozess ausgeführt wird (268), der die gegenwärtige aktuelle Klassifikation als eine frühere Klassifikation identifiziert und frühere Klassifikationen nach Ablauf einer vorbestimmten Zeit löscht.

6. Ein System (100) zum Ausführen einer Klassifikation von einer mobilen Anwendung, umfassend:
ein Akquirierungsmodul (101), das ausgebildet ist, von einer oder mehreren Eingabequellen (190) einen oder mehrere Eingabesätze zu erlangen, wobei die Eingabesätze Schicht-4 und Schicht-7 Informationen beinhalten;
die Schicht 4 und Schicht 7 sind Schichten des Open System Interconnection, OSI, Modells;
ein Klassifikationsmodul (102), umfassend wenigstens einen dauerhaften Anwendungsspeicher (121) und einen dauerhaften Domain Name System, DNS, Signaturspeicher (122), das Klassifikationsmodul ausgebildet, um zu bewerten, ob einer oder mehrere der Eingabesätze nicht bereits mit einer Klassifikation ausgestattet wurden, indem ein Satz von Signaturen mit Schicht-4 und Schicht-7 Informationen verglichen wird;
ein dauerhaftes Speichermodul (103), das ausgebildet ist, die Klassifikationen und frühere Klassifikationen in einem mobilen Kontext zu speichern;
ein Profilerzeugungsmodul (104), umfassend wenigstens einen dauerhaften Speicher (141) zum Speichern von Verkehrsprofilen, das Profilerzeugungsmodul ausgebildet, um einen aktuellen Klassifikationsstatus (261), bestehend aus einem Satz von möglichen Anwendungen, durch Anwenden der klassifizierten Eingabesätze zu erzeugen und zum Speichern, in dem permanenten Speichermodul, des aktuellen Klassifikationsstatus in dem mobilen Kontext;
ein Ausgabemodul (105), das ausgebildet ist, eine finale Klassifikation (265) basierend auf dem aktuellen Klassifikationsstatus (261) und den früheren Klassifikationen auszugeben;
dadurch charakterisiert, dass das Ausgabemodul weiterhin ausgebildet ist, eine Gewichtung auf die aktuelle Klassifikation anzuwenden, um dieser mehr Relevanz verglichen mit früheren Klassifikationen in der finalen Klassifikation zu geben.

7. Das System nach Anspruch 6, dadurch charakterisiert, dass das Akquirierungsmodul (101) Informationen akquiriert von wenigstens einem von: Netzwerkknoten, Netzwerksonden, Inhalt-Firewalls, Inhaltsoptimierern, Inhaltsproxies, Inhaltspuffer, Routern mit netzdatenflussäquivalenten Fähigkeiten.

8. Computerlesbares Medium umfassend Instruktionen, die das System (100) nach Anspruch 6 veranlassen, alle Schritte des Verfahrens nach Anspruch 1 auszuführen.

## Revendications

1. Procédé pour effectuer une classification d'application mobile, comprenant :
l'obtention (251), depuis une ou plusieurs source(s) d'entrée, d'un ou plusieurs enregistrement(s) d'entrée, les enregistrements d'entrée contenant des informations de couche 4 et de couche 7 ;
la couche 4 et la couche 7 étant les couches du modèle d'interconnexion de système ouvert, OSI ;
l'évaluation (252) par analyse du ou des enregistrements d'entrée obtenu(s) depuis la ou les source(s) d'entrée, du fait qu'un ou plusieurs des enregistrements d'entrée a(ont) déjà été doté(s) d'une classification ;
si le ou les enregistrement(s) d'entrée n'a pas ou n'ont pas déjà été doté(s) d'une classification (253), la fourniture d'une classification au(x) enregistrement(s) d'entrée en faisant correspondre un ensemble de signatures aux informations de couche 4 et de couche 7 du ou des enregistrement(s) d'entrée ;
la génération d'un état de classification en cours (261) consistant en un ensemble d'applications possibles en utilisant les classifications ;
la mémorisation, dans un contexte mobile, de l'état de classification en cours, dans lequel, dans le contexte mobile (266), des classifications antérieures sont également mémorisées ;
la génération d'une classification finale (265) en tant que sortie du procédé de classification, en se basant sur une combinaison de l'état de classification en cours et des classifications antérieures ;
**caractérisé en ce que** la classification finale est générée en appliquant une pondération à l'état de classification en cours pour lui conférer une plus grande pertinence par rapport aux classifications antérieures dans la classification finale.

2. Procédé selon la revendication 1, **caractérisé en ce que** les enregistrements d'entrée contiennent au moins un ou plusieurs parmi ce qui suit : horodatage, identifiant de mobile, identifiant de session, octets de liaison montante, octets de liaison descendante, durée de passage.

3. Procédé selon la revendication 1 ou 2, **caractérisé en ce que** les signatures sont déterminées d'après une inspection automatique du trafic non chiffré de l'application.

4. Procédé selon la revendication 1 ou 2, **caractérisé en ce que** les signatures sont déterminées d'après une inspection manuelle du trafic non chiffré de l'application.

5. Procédé selon l'une quelconque des revendications précédentes, **caractérisé en ce qu'**un processus de tenue des comptes est exécuté (268), qui identifie la classification en cours réelle en tant que classification antérieure et efface les classifications antérieures après qu'un temps prédéterminé s'est écoulé.

6. Système (100) pour effectuer une classification d'application mobile, comprenant :
un module d'acquisition (101) configuré pour obtenir, depuis une ou plusieurs source(s) d'entrée (190), un ou plusieurs enregistrement(s) d'entrée, les enregistrements d'entrée contenant des informations de couche 4 et de couche 7 ;
la couche 4 et la couche 7 étant les couches du modèle d'interconnexion de système ouvert, OSI ;
un module de classification (102) comprenant au moins une mémoire d'application persistante (121) et une mémoire de signature persistante de système de noms de domaine, DNS, (122) configuré pour évaluer si le ou les enregistrement(s) d'entrée a(ont) déjà été doté(s) d'une classification, en faisant correspondre un ensemble de signatures aux informations de couche 4 et de couche 7 ;
un module de mémoire persistante (103) configuré pour mémoriser les classifications et les classifications antérieures dans un contexte mobile ;
un module de génération de profil (104) comprenant au moins une mémoire persistante (141) contenant des profils de trafic, configuré pour générer un état de classification en cours (261) consistant en un ensemble d'applications possibles en utilisant les enregistrements d'entrée classés et pour mémoriser, dans le module de mémoire persistante, l'état de classification en cours dans le contexte mobile ;
un module de sortie (105) configuré pour fournir en sortie une classification finale (265), en se basant sur l'état de classification en cours (261) et sur les classifications antérieures ;
**caractérisé en ce que** le module de sortie est configuré en outre pour applique une pondération à la classification en cours pour lui conférer une plus grande pertinence par rapport aux classifications antérieures dans la classification finale.

7. Système selon la revendication 6, **caractérisé en ce que** le module d'acquisition (101) effectue une acquisition d'informations depuis au moins un parmi :
des noeuds de réseau, des sondes de réseau, des pare-feux de contenu, des optimiseurs de contenu, des mandataires de contenu, des antémémoires de contenu, des routeurs avec des capacités équivalentes de flux de réseau.

8. Support lisible par un ordinateur comprenant des instructions qui font exécuter par le système (100) selon la revendication 6, toutes les étapes du procédé selon la revendication 1.
